# EUROPÄISCHE PATENTANMELDUNG

(11) **EP 4 837 748 A1**
(43) Veröffentlichungstag der Anmeldung: **11.11.2026**
(21) Anmeldenummer: 26176507.7
(22) Anmeldetag: 05.05.2026
(51) Int. Cl.: B60B 19/00, B60B 19/12, B60B 33/00, B60B 19/14

(54) **OMNIDIREKTIONALES ZWILLINGSRAD**

(30) Priorität: 08.05.2025 DE 102025117767
(71) Anmelder: Gerhard Schubert GmbH, 74564 Crailsheim (DE)
(72) Erfinder: Henn, Felix, 74564 Crailsheim (DE)
(74) Vertreter: Weickmann & Weickmann PartmbB

(57) **Zusammenfassung**

Die vorliegende Erfindung betrifft ein omnidirektionales Zwillingsrad (10), umfassend eine erste und eine zweite zu einer gemeinsamen Drehung miteinander gekoppelte Aufhängungsachse (12a, 12b), welche parallel zu einem Fahruntergrund (F) ausgerichtet sind, eine erste und eine zweite Gabel (18a, 18b), welche jeweils drehfest mit der zugehörigen Aufhängungsachse (12a, 12b) gekoppelt sind, und eine erste und eine zweite kugelringförmige Rolle (20a, 20b), welche jeweils derart über die erste bzw. zweite Gabel (18a, 18b) mit der zugehörigen Aufhängungsachse (12a, 12b) gekoppelt sind, dass jeweilige Mittelpunkte der Rollen (20a, 20b) mit einer Verlängerung der entsprechenden Aufhängungsachse (12a, 12b) ausgerichtet sind, wobei jede der Rollen (20a, 20b) von der zugehörigen Gabel (18a, 18b) um eine Zylinderachse (22a, 22b) frei drehbar getragen ist, wobei die Zylinderachsen (22a, 22b) der ersten und der zweiten Rolle (20a, 20b) im Wesentlichen senkrecht zueinander und in der Ebene senkrecht zu den Aufhängungsachsen (12a, 12b) stehen und die Mantelflächen der Rollen (20a, 20b) einen Winkel von wenigstens 90° überdecken und die Gabeln (18a, 18b) im Bereich der Zylinderachsen (22a, 22b) nicht breiter sind als die Abrollkreise der Rollen (20a, 20b), so dass die Gabeln (18a, 18b) in keiner Ausrichtung mit dem Fahruntergrund (F) in Kontakt kommen. Ferner betrifft die Erfindung eine Radanordnung mit wenigstens drei derartigen Zwillingsrädern sowie ein Fahrzeug mit wenigstens einem derartigen Zwillingsrad.

## Beschreibung

Die vorliegende Erfindung betrifft ein omnidirektionales Zwillingsrad, eine Radanordnung, welche wenigstens drei derartige Zwillingsräder umfasst, sowie ein Fahrzeug, welches wenigstens ein derartiges Zwillingsrad umfasst.

Insbesondere zum Antreiben und Manövrieren von Robotern, die sich durch eine hohe Beweglichkeit auszeichnen sollen, sind in jüngerer Zeit unterschiedlicher Ausgestaltungen von omnidirektionalen Rädern zum Einsatz gekommen. Ein bei Beispiel hierfür stellen Räder da, welche an Ihrem Umfang wiederum mit mehreren einzeln antreibbaren Rollen versehen sind, um möglichst den gesamten Umfang davon abzudecken. Indem sowohl das Rad an sich um seine Nabe als auch die an dessen Umfang vorgesehenen Rollen einzeln unabhängig zu einer jeweiligen Rotation angetrieben werden können, kann folglich eine omnidirektionale Bewegung der mit einem solchen Rad ausgerüsteten Vorrichtung durch eine Überlagerung der Radrotation und der Rollenrotation erzielt werden.

Hierbei können die auf dem Umfang solcher Räder angeordneten Rollen in verschiedener Weise positioniert sein, beispielsweise nebeneinander, schräg zueinander, abwechselnd in mehreren Ebenen, ineinandergreifend durch gewölbte Kugelstumpfe oder durch abwechselnde Größen der Rollen oder auch als Kugelsegmente um eine zentrale Achse.

In diesem Zusammenhang zeigen sich jedoch je nach konkreter Ausführung unterschiedliche Probleme, da entweder der Umfang des entsprechenden Rads nicht vollständig abgedeckt werden kann, was zu undefinierten und lückenhaften Übergängen beim Abrollen führen kann, oder da in anderen Gestaltungen die Rollen nicht in einer einzelnen Ebene laufen, was zu einer Überdefinition der Hauptrotationsachse führen kann, beispielsweise bei einer üblichen kreisförmigem Radanordnung in omnidirektionalen Fahrzeugen. Ferner weisen derartige omnidirektionale Räder in der Regel einen großen Umfang auf, unter anderem aufgrund der notwendigen Lagerung der zahlreichen auf ihrem Umfang vorgesehenen Rollen.

Zudem ist bei den üblicherweise eingesetzten Typen von Motoren und Geschwindigkeiten praktisch immer das Vorsehen einer zusätzlichen Getriebestufe bei Verwendung mit derartigen Rädern notwendig. Des Weiteren sind derartige Räder komplex aufgebaut und umfassen eine Vielzahl von Baukomponenten, was sich unter anderem durch die hohe Anzahl von Rollen an Ihrem Umfang erklärt, welche jeweils einzeln gelagert und angetrieben werden müssen.

Beispielsweise ist aus der US 9,573,416 B1 ein omnidirektionales Zwillingsrad bekannt, welches eine Lagerung aufweist, in welcher die entsprechenden Rollen in einer komplexen Weise bezüglich einander gelagert sind. Wenngleich eine derartige Ausgestaltung eines Zwillingsrads verglichen mit den bereits beschriebenen omnidirektionalen Rädern unter anderem eine verkleinerte Bauhöhe aufweisen kann, so sind doch weiterhin eine Vielzahl von Komponenten vorzusehen und der Aufbau und die Wartung entsprechender Vorrichtungen sind aufgrund dessen aufwendig.

Dementsprechend besteht ein Bedarf nach einer verbesserten Ausgestaltung einer omnidirektionalen Radvorrichtung, welche einerseits einfach und mit wenigen Komponenten aufgebaut ist und hierbei einen relativ kleinen Bauraum benötigt, während sie andererseits einen zuverlässigen und schonenden Betrieb mit einem zu jeder Zeit gleichmäßigen Abrollen aufweist.

Zur Lösung dieser Aufgabe und zur Behebung der oben beschriebenen Nachteile des bekannten Stands der Technik wird erfindungsgemäß ein omnidirektionales Zwillingsrad vorgeschlagen, umfassend eine erste und eine zweite zu einer gemeinsamen Drehung miteinander gekoppelten Aufhängungsachse, welche parallel zu einem Fahruntergrund ausgerichtet sind, eine erste und eine zweite Gabel, welche jeweils drehfest mit der zugehörigen Aufhängungsachse gekoppelt sind, eine erste und eine zweite kugelringförmige Rolle, welche jeweils derart über die erste bzw. zweite Gabel mit der zugehörigen Aufhängungsachse gekoppelt sind, dass jeweilige Mittelpunkte der Rollen mit einer Verlängerung der entsprechenden Aufhängungsachse ausgerichtet sind, wobei jede der Rollen von der zugehörigen Gabel um eine Zylinderachse frei drehbar getragen ist, wobei die Zylinderachsen der ersten und der zweiten Rolle im Wesentlichen senkrecht zueinander und in der Ebene senkrecht zu den Aufhängungsachsen stehen, und die Mantelflächen der Rollen jeweils einen Winkel von wenigstens 90° überdecken und die Gabeln im Bereich der Zylinderachsen nicht breiter sind als die Abrollkreise der Rollen, so dass die Gabeln in keiner Ausrichtung mit dem Fahruntergrund in Kontakt kommen.

Dementsprechend zeichnet sich das erfindungsgemäße Zwillingsrad dadurch aus, das durch den jeweiligen, mehr als neunzig Grad betragenden Winkel der Mantelflächen der Rollen eine Abrollbewegung stehts lückenlos abgedeckt wird und somit ein sanfter Übergang auch dann ermöglicht wird, wenn eine der Rollen gerade nicht mit dem Unterging in Kontakt ist, da sich die zugehörige Gabel momentan in einer entsprechenden Winkelausrichtung befindet. Ferner können die Rollen auf einem gemeinsamen Teilkreis liegen, sodass keine Überdefinition vorliegt, und indem das entsprechende Zwillingsrad lediglich zwei Rollen und eine einfach aufgebaute Aufhängung aufweist, sind nur wenige einzelne Komponenten und damit Verschleißteile vorgesehen. Allgemein sei ferner darauf hingewiesen, dass sowohl Ausführungsformen denkbar sind, in welchen die Gabeln die jeweilige Rolle von beiden gegenüberliegenden Seiten tragen, als auch Ausführungsformen, in welchen sich die Gabeln lediglich auf einer Seite der entsprechenden Rolle erstrecken, um diese zu tragen.

Ein weiterer Vorteil besteht darin, dass der Durchmesser der Rollen einem Durchmesser der oben beschriebenen omnidirektionalen Räder aus dem Stand der Technik entsprechen kann und damit bei gleicher Tragfähigkeit ein kleinerer Gesamtdurchmesser erzielt werden kann. Ferner kann auf Getriebestufen vollständig verzichtet werden oder es können wenigstens kleinere Getriebestufen eingesetzt werden, was den Aufbau des erfindungsgemäßen Zwillingsrads ebenfalls vereinfacht. Zuletzt kann durch die abgeschnittenen Polstellen der entsprechenden Rollen verhindert werden, dass überhöhte Rollengeschwindigkeiten bei einer Drehung der Rollen auftreten.

Somit tritt in dem erfindungsgemäßen Zwillingsrad kein Verschleiß durch übermäßige Kantenbelastungen bei Übergängen zwischen einem Kontakt der jeweiligen Rolle mit dem Untergrund und einer Trennung der Rolle vom Untergrund auf und auch kein Abrieb bzw. keine Relativbewegung durch Geschwindigkeitsdifferenzen, welche bei einer Überdefinition auftreten können. Ferner ist durch den einfachen Aufbau mit lediglich zwei Rollen ein verringerter Serviceaufwand zu erwarten und aufgrund des verhältnismäßig klein wählbaren Durchmessers der Rollen kann beim Einsatz üblicher Elektromotoren auf Getriebestufen in der angesprochenen Weise verzichtet werden. Dennoch zeigt sich in der Praxis, dass mittels entsprechender Zwillingsräder eine hervorragende Positioniergenauigkeit erzielt werden kann, da zu jeden Zeitpunkt ein sauberes Abrollen am Untergrund sichergestellt ist.

Hierbei kann unter anderem vorgesehen sein, dass zur Kopplung der ersten und zweiten Aufhängungsachsen des erfindungsgemäßen Zwillingsrads eine Zahnradkopplung und/oder eine Zahnriemenkopplung eingesetzt wird. Diese Kopplung kann auch bereits als Anbindungspunkt für eine Antriebseinheit wirken, welche dazu eingerichtet ist, die erste und die zweite Aufhängungsachse synchron zu einer Rotation anzutreiben. Alternativ wäre es jedoch selbstverständliche ebenfalls denkbar, die beiden Aufhängungsachsen unabhängig voneinander mittels separater Antriebseinheiten anzutreiben, so dass die winkelbezogene Kopplung und die korrekte Ausrichtung der beiden Aufhängungsachsen nicht mechanische sondern beispielsweise mittels elektronischer Überwachungsmittel sichergestellt werden müssten.

Theoretisch wäre es ferner ebenfalls möglich, ein erfindungsgemäßes omnidirektionales Zwillingsrad rein freilaufend vorzusehen, das heißt auf eine entsprechende Antriebseinheit zu verzichten. Dementsprechend würde in einer derartigen Variante der Erfindung das Zwillingsrad lediglich als Lastrad-Baugruppe wirken.

Weiterhin ist es erfindungsgemäß denkbar, aus wenigstens drei Zwillingsrädern der eben beschriebenen erfindungsgemäßen Art eine Radanordung aufzubauen, in welcher die Zwillingsräder insbesondere auf einem Kreisumfang angeordnet sein können. Hierbei kann durch eine entsprechende Anordnung, insbesondere wenn die Zwillingsräder auf dem entsprechenden Kreisumfang jeweils um einen gleichen Winkel voneinander beabstandet sind, und geeignete Ansteuerung der jeweiligen Antriebseinheit eine beliebige Fahrtrichtung hervorgerufen werden und demzufolge ein omnidirektionaler Antrieb erzielt werden.

Dementsprechend betrifft die vorliegende Erfindung ebenfalls ein Fahrzeug, welches wenigstens ein erfindungsgemäßes Zwillingsrad oder eine erfindungsgemäße Radanordnung in der eben beschriebenen Weise umfasst. Hierbei kann jedes der Zwillingsräder eine jeweilige eigene Antriebseinheit umfassen und es kann ferner eine zentrale Steuereinheit vorgesehen sein, welche dazu eingerichtet ist, die jeweiligen Antriebseinheiten der Zwillingsräder in koordinierter Weise anzusteuern. Indem die jeweiligen Aufhängungsachsen der Rollen der Zwillingsräder der Radanordnung mit unterschiedlichen Geschwindigkeiten entweder mit oder gegen den Uhrzeigesinn angetrieben werden, kann eine beliebige Bewegung eines entsprechenden Fahrzeugs hervorgerufen werden, einschließlich einer Geradeausfahrt, einer Eigendrehung auf der Stelle und einer Drehung um einen beliebig orientierten Punkt außerhalb des Fahrzeugs.

Weitere Merkmale und Vorteile der vorliegenden Erfindung werden aus der nachfolgenden Beschreibung noch deutlicher, wenn diese zusammen mit den beiliegenden Figuren betrachtet wird. Diese zeigen im Einzelnen:
- Figuren 1a und 1b: eine isometrische und eine Vorderansicht eines erfindungsgemäßen omnidirektionalen Zwillingsrads;
- Figur 2: eine schematische Darstellung des Zwillingsrads aus den Figu-ren 1a und 1b;
- Figuren 3a und 3b: eine schematische Vorderansicht bzw. Draufsicht der Rollen des Zwillingsrads aus den Figuren 1a, 1b und 2;
- Figuren 4a und 4b: zwei Vorderansichten der Rollen aus den Figuren 3a und 3b zur Verdeutlichung eines Abrollvorgangs;
- Figur 5: ein erfindungsgemäße Radanordnung in einer schematischen Draufsicht als Teil eines erfindungsgemäßen Fahrzeugs; und
- Figuren 6a bis 6c: schematische Draufsichten zur Verdeutlichung unterschiedlicher Bewegungsformen der Radanordnung aus Figur 5.

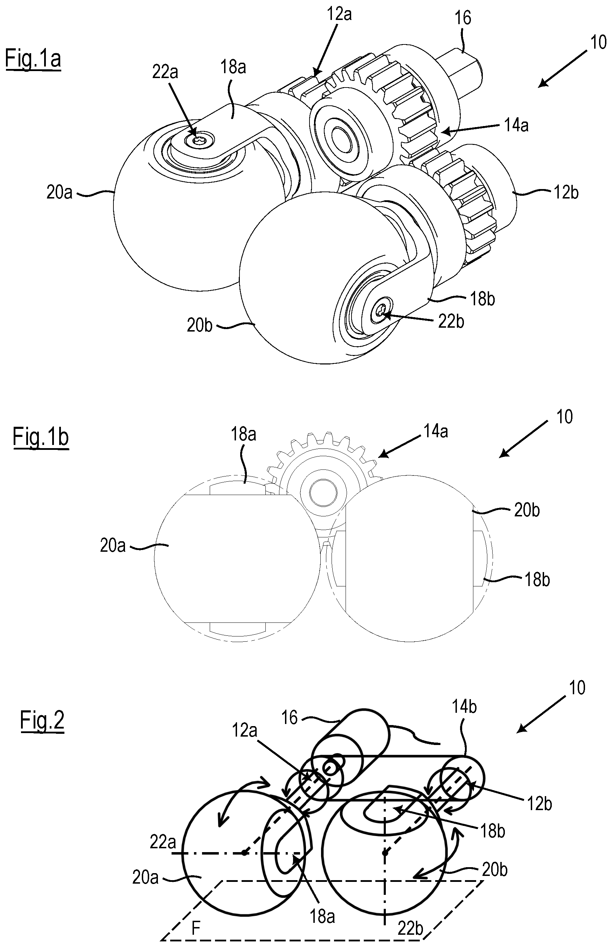

In den Figuren 1a und 1b ist zunächst ein erfindungsgemäßes omnidirektionales Zwillingsrad in einer isometrischen und einer Vorderansicht gezeigt. Die Komponenten dieses Zwillingsrads können hierbei mittels beliebiger geeigneter Materialien hergestellt sein, beispielsweise Metallwerkstoffe oder ausreichend harte Kunststoffe. Ferner sei ebenfalls bereits auf Figur 2 verwiesen, welche in einer ähnlichen Perspektive wie die Darstellung aus Figur 1a das Zwillingsrad erneut in einer schematischen Darstellung zeigt, um die einzelnen Komponenten davon zusammen mit ihrer jeweiligen Funktionsweise verdeutlichen zu können.

In diesen Figuren ist das erfindungsgemäße Zwillingsrad jeweils mit den Bezugszeichen 10 bezeichnet und es umfasst eine erste und eine zweite Aufhängungsachse 12a und 12b, welche jeweils parallel zu einem Fahruntergrund F ausgerichtet sind. Hierbei sind die erste und die zweite Aufhängungsachse 12a, 12b über eine mechanische Kopplung zu einer gemeinsamen Drehung miteinander gekoppelt, wobei die entsprechende Kopplung in den Figuren 1a und 1b als Zahnradkopplung 14a und in Figur 2 als Zahnriemenkopplung 14b dargestellt ist. Die entsprechende Kopplung 14a bzw. 14b dient jeweils auch bereits als Anbindungspunkt für eine schematisch dargestellte Antriebseinheit 16 in Form eines geeigneten Elektromotors, welche dazu eingerichtet ist, über die jeweilige Kopplung 14a bzw. 14b die Aufhängungsachsen 12a, 12b synchron in Rotation einzutreiben.

Hierbei sind eine erste und eine zweite Gabel 18a, 18b drehfest mit der jeweils zugehörigen Aufhängungsachse 12a, 12b gekoppelt. Diese Gabeln 18a, 18b tragen wiederum von außen her erste und zweite kugelringförmige Rollen 20a, 20b derart, dass sie sich seitlich im Bereich eines abgeflachten Teils dieser Rollen 20a, 20b erstrecken und in diesem Bereich eine jeweilige Zylinderachse 22a, 22b zu einem freilaufenden Tragen der entsprechenden Rollen 20a, 20b an den Gabeln 18a, 18b angeordnet ist. Insbesondere in Figur 1b ist zu erkennen und durch gestrichelt dargestellte Kreise verdeutlicht, dass die Gabeln 18a, 18b sind nicht über die jeweiligen Abrollkreise der Rollen 20a, 20b hinaus erstrecken oder anders ausgedrückt im Bereich der Zylinderkreise 22a, 22b nicht breiter sind als die genannten Abrollkreise.

Fener ist zu erkennen, dass die Zylinderachsen 22a und 22b der ersten und zweiten Rolle 20a, 20b senkrecht zueinander stehen und in der Ebene ebenfalls senkrecht zu den beiden Aufhängungsachsen 12a, 12b liegen. Zudem sei darauf hingewiesen, dass die jeweiligen Mittelpunkte der Rollen 20a, 20b in den Verlängerungen der entsprechenden Aufhängungsachsen 12a, 12b liegen.

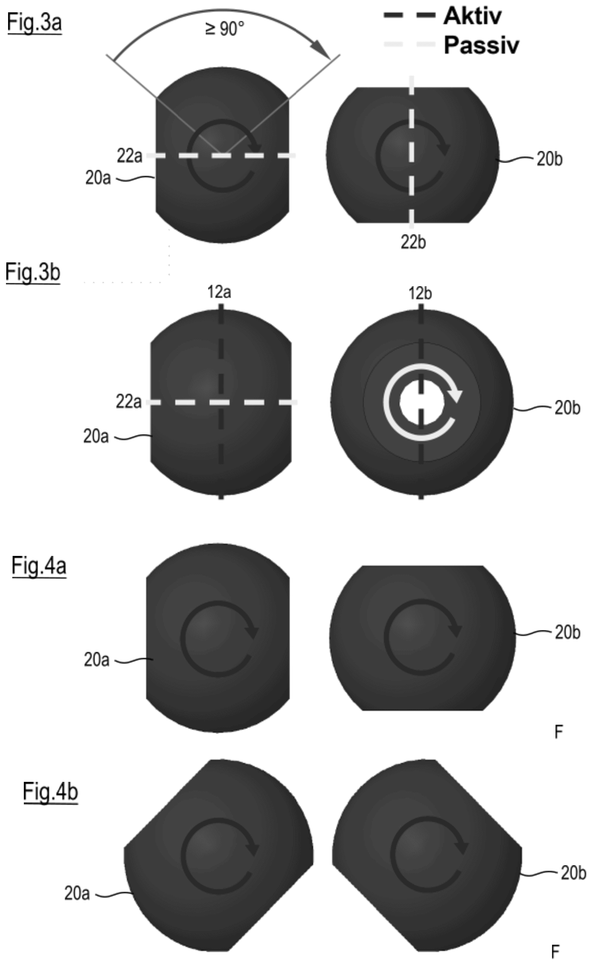

In den Figuren 3a und 3b sind die beiden Rollen 20a, 20b zunächst noch einmal paarweise in einer Vorderansicht bzw. einer Draufsicht gezeigt, um einerseits Ihre Außenform noch einmal zu verdeutlichen und andererseits die jeweiligen Achsen in Bezug zu den entsprechenden Ansichten zu stellen. Insbesondere ist zu erkennen, dass wie in Figur 3a angezeigt die Mantelflächen der Rollen 20a, 20b einen Winkel von wenigstens neunzig Grad überdecken, wobei ja bereits in Figur 1b ferner zu erkennen war, dass die Gabeln 18a und 18b im Bereich der Zylinderachsen 22a, 22b nicht breiter sind als die Abrollkreise der Rollen 20a, 20b, sodass beispielsweise auch in der Stellung aus Figur 2 die entsprechende Gabel 22b der rechts dargestellten Rolle 20b nicht mit dem Fahruntergrund F in Kontakt kommen wird.

Ferner kann in den Figuren 3a und 3b jeweils nachvollzogen werden, dass entsprechend der in der Figur enthaltenen Legende einerseits passive Achsen vorliegen, das heißt jeweils eine freie Rotation der entsprechende Rolle 20a, 20b um die Zylinderachse 22a bzw. 22b ermöglicht ist, während durch den Antrieb 16 und die Vermittlung über die Kopplung 14a bzw. 14b sowie die Gabeln 18a, 18b ein entsprechender aktiver Antrieb der Rollen um die ebenfalls als aktiv dargestellten Achsen bzw. gemäß den derart dargestellten Kreisen erzielt wird.

Des Weiteren sei auf die Figuren 4a und 4b verwiesen, welche jeweils in einer Vorderansicht entsprechend der Darstellung aus der Figur 3a in schematischer Weise das Abrollen der Rollen 20a, 20b des erfindungsgemäßen Zwillingsrads 10 während eines Antriebs durch die Antriebseinheit 16 mittels der kreisförmigen Pfeile veranschaulicht. Hierbei zeigt sich in der Darstellung aus Figur 4a, dass zunächst einmal lediglich die links dargestellte Rolle 20a im Bereich ihrer Mantelfläche auf dem Untergrund aufliegt, während die rechts dargestellte Rolle 20b mit ihrem abgeflachten Bereich in Richtung des Fahruntergrunds F zeigt, wo jedoch die hier aus Gründen der Übersichtlichkeit nicht dargestellte, schmal ausgeführte Gabel 18b vorliegt, welche durch ihre Bauweise sowie die Überdeckung der Mantelfläche der Rolle 20b nicht mit dem Untergrund F in Kontakt kommt.

Wenn nun die Abrollbewegung durch einen Betrieb der Antriebseinheit 16 ausgelöst wird und nach einer bestimmten Zeit dementsprechend der Zustand aus Figur 4b eigenommen wird, so zeigt sich, dass in dieser Winkelorientierung der beiden Rollen 20a, 20b diese jeweils mit einem Abschnitt ihrer Mantelflächen auf dem Fahruntergrund F aufliegen, sodass bei einem weiteren Übergang in diese Richtung die links dargestellte Rolle 20a den Kontakt zum Untergrund verlieren wird, jedoch die rechts dargestellte Rolle 20b auf ihrer Mantelfläche in dieser Richtung abrollen kann. Dementsprechend ist stets wenigstens eine der Rollen 20a, 20b mit dem Fahruntergrund F in Kontakt und es wird zu jedem Zeitpunkt ein flüssiges Abrollen des Zwillingsrads 10 als Ganzes gewährleistet.

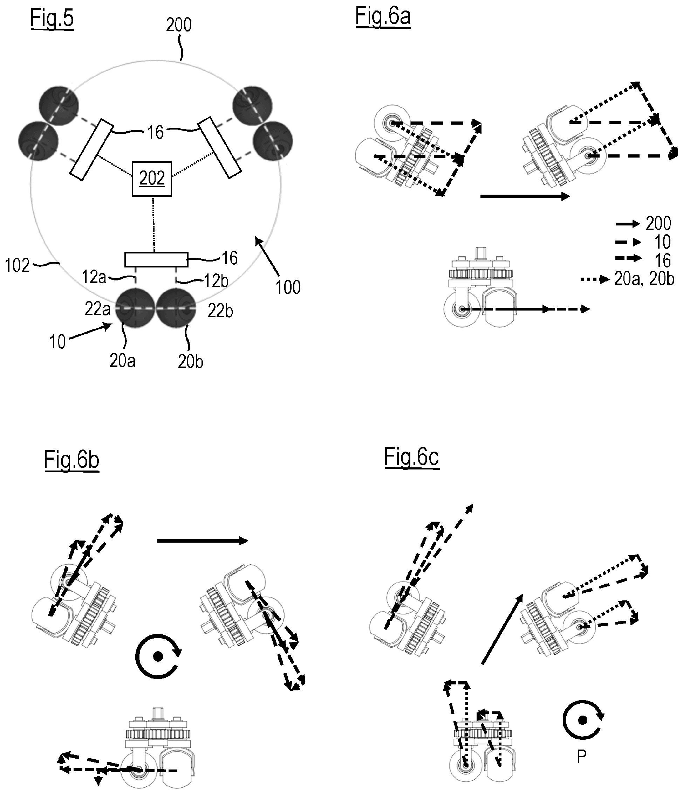

Weiterhin sei auf Figur 5 verwiesen, welche eine erfindungsgemäße Randanordnung 100 zeigt, in welcher drei erfindungsgemäße Zwillingsräder 10 auf einem Kreisumfang 102 angeordnet und jeweils um einen gleichen Winkel von 120° voneinander beanstandet angeordnet sind. Die Radanordnung 100 kann hierbei an der Unterseite eines nicht weiter dargestellten omnidirektional bewegbaren Fahrzeugs 200 angeordnet sein, beispielsweise eines autonom betreibbaren Roboters oder ähnlichem.

Hierbei sind erneut die aktiven und passiven Achsen der jeweiligen Rollen 20a, 20b der Zwillingsräder 10 dargestellt, um die Ausrichtung davon in Bezug auf den unterhalb der Radanordnung 100 befindlichen Fahruntergrund zu verdeutlichen. Hierbei kann ferner jedes der Zwillingsräder 10 eine eigene jeweilige Antriebseinheit 16 umfassen, welche von einer schematisch dargestellten zentralen Steuereinheit 202 des Fahrzeugs 200 in geeigneter Weise gekoppelt ist und zu einem Betrieb angesteuert werden kann.

Beispielhafte Betriebsformen für unterschiedliche Fortbewegungsweisen des entsprechenden Fahrzeugs 200 mittels der Radanordnung 100 werden im Folgenden zuletzt anhand der Figuren 6a bis 6c erläutert.

Hierbei ist jeweils gemäß der in diesen Figuren dargestellten Legende zum einen eine Bewegung des Fahrzeugs 200 als Ganzes dargestellt, sowie die Antriebsrichtung der jeweiligen Antriebseinheit 16, die Bewegungsrichtung der jeweiligen Zwillingsräder 10 sowie die passiven Abrollbewegungen der einzelnen Rollen 20a, 20b. Es ist zu beachten, dass jedes der Zwillingsräder 10 in differentieller Weise einzeln ansteuerbar ist, d.h. in zwei entgegengesetzte Richtung mit oder gegen den Uhrzeigersinn sowie mit variabler Drehgeschwindigkeit.

Insbesondere entspricht hierbei die Figur 6a einer linearen Geradeausbewegung des Fahrzeugs 200 nach rechts, die Figur 6b einer Drehung des Fahrzeugs auf der Stelle und die Figur 6c einer Drehung des Fahrzeugs 200 um einen außerhalb des Fahrzeugs 200 liegenden Punkt P.

Dementsprechend zeigt sich, dass durch eine geeignete differenzielle Ansteuerung der drei Antriebseinheiten 16 entweder im Uhrzeigersinn oder gegen den Uhrzeigersinn sämtliche dieser Bewegungsformen des Fahrzeugs 200 erzielt werden können, sodass insgesamt ein omnidirektionales Verhalten des Fahrzeugs 200 mit Hilfe der drei Zwillingsräder 10 und durch geeignete Ansteuerung ihrer jeweiligen Antriebseinheiten 16 mittels der zentralen Steuereinheit 202 des Fahrzeugs 200 erzielt werden kann.

## Patentansprüche

1. Omnidirektionales Zwillingsrad (10), umfassend:
- eine erste und eine zweite zu einer gemeinsamen Drehung miteinander gekoppelte Aufhängungsachse (12a, 12b), welche parallel zu einem Fahruntergrund (F) ausgerichtet sind;
- eine erste und eine zweite Gabel (18a, 18b), welche jeweils drehfest mit der zugehörigen Aufhängungsachse (12a, 12b) gekoppelt sind, und
- eine erste und eine zweite kugelringförmige Rolle (20a, 20b), welche jeweils derart über die erste bzw. zweite Gabel (18a, 18b) mit der zugehörigen Aufhängungsachse (12a, 12b) gekoppelt sind, dass jeweilige Mittelpunkte der Rollen (20a, 20b) mit einer Verlängerung der entsprechenden Aufhängungsachse (12a, 12b) ausgerichtet sind; wobei jede der Rollen (20a, 20b) von der zugehörigen Gabel (18a, 18b) um eine Zylinderachse (22a, 22b) frei drehbar getragen ist;
wobei die Zylinderachsen (22a, 22b) der ersten und der zweiten Rolle (20a, 20b) im Wesentlichen senkrecht zueinander und in der Ebene senkrecht zu den Aufhängungsachsen (12a, 12b) stehen; und
die Mantelflächen der Rollen (20a, 20b) einen Winkel von wenigstens 90° überdecken und die Gabeln (18a, 18b) im Bereich der Zylinderachsen (22a, 22b) nicht breiter sind als die Abrollkreise der Rollen (20a, 20b), so dass die Gabeln (18a, 18b) in keiner Ausrichtung mit dem Fahruntergrund (F) in Kontakt kommen.

2. Zwillingsrad (10) nach Anspruch 1,
wobei zur Kopplung der ersten und zweiten Aufhängungsachsen (12a, 12b) eine Zahnradkopplung (14a) oder eine Zahnriemenkopplung (14b) vorgesehen ist.

3. Zwillingsrad nach (10) einem der vorhergehenden Ansprüche,
ferner umfassend eine Antriebseinheit (16), welche dazu eingerichtet ist, die erste und zweite Aufhängungsachse (12a, 12b) synchron in Rotation anzutreiben.

4. Radanordnung (100), umfassend wenigstens drei Zwillingsräder (10) nach einem der vorhergehenden Ansprüche.

5. Radanordnung (100) nach dem vorhergehenden Anspruch, wobei die Zwillingsräder (10) auf einem Kreisumfang angeordnet sind.

6. Radanordnung (100) nach dem vorhergehenden Anspruch,
wobei die Zwillingsräder (10) auf dem Kreisumfang jeweils um einen gleichen Winkel voneinander beabstandet sind.

7. Fahrzeug (200), umfassend wenigstens ein Zwillingsrad (10) nach einem der Ansprüche 1 bis 3.

8. Fahrzeug (200) nach Anspruch 7, umfassend eine Radanordnung (100) nach einem der Ansprüche 4 bis 6.

9. Fahrzeug (200) nach Anspruch 8,
wobei jedes der Zwillingsräder (10) eine jeweilige Antriebseinheit (16) umfasst.

10. Fahrzeug (200) nach Anspruch 9,
ferner umfassend eine zentrale Steuereinheit (202), welche dazu eingerichtet ist, die Antriebseinheiten (16) der Zwillingsräder (100) in koordinierter Weise anzusteuern.
